(19) Europäisches Patentamt
European Patent Office
Office européen des brevets

(11) EP 2 345 926 A1

(12) EUROPEAN PATENT APPLICATION

(43) Date of publication:
20.07.2011 Bulletin 2011/29

(51) Int Cl.:
G02F 1/13357 (2006.01)  G02F 1/1335 (2006.01)
G02B 5/30 (2006.01)

(21) Application number: 10014963.2

(22) Date of filing: 25.11.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 30.11.2009 KR 20090117062

(71) Applicant: Samsung Electronics Co., Ltd.
Yeongtong-gu
Suwon-city, Gyeonggi-do
442-742 (KR)

(72) Inventors:
• Kim, Dong-Hoon
Suwon-si
Gyeonggi-do (KR)
• Choi, Jin-Sung
Suwon-si
Gyeonggi-do (KR)
• Kim, Seung-Mo
Suwon-si
Gyeonggi-do (KR)
• Lee, Kang-Woo
Suwon-si
Gyeonggi-do (KR)

(74) Representative: Weitzel, Wolfgang
Friedenstrasse 10
89522 Heidenheim (DE)

(54) **Display apparatus with a reflective polarizer including microfiber yarns**

(57) An optical body (140) for a display apparatus (500) which can improve brightness of a display apparatus (500) and a display apparatus (500) are provided. The display apparatus (500) includes a light source (50), a display panel (400) that receives light from the light source (50) and displays an image, and an optical body (140) positioned between the light source (50) and the display panel (400), wherein the optical body includes an optical layer (141) including a plurality of microfiber yarns (144) having refractive index anisotropy, and pitches of the plurality of microfiber yarns (144) are set based by the wavelength of the light to be transmitted or reflected.

FIG. 3

EP 2 345 926 A1

**Description**

CROSS-REFERENCE TO RELATED APPLICATION

This application claims priority from Korean Patent Application No. 10-2009-0117062 filed on November 30, 2009 in the Korean Intellectual Property Office, the disclosure of which is incorporated herein by reference in its entirety.

BACKGROUND OF THE INVENTION

1. Field of the Invention

The present invention relates to an optical body and a display apparatus using the same, and more particularly, to an optical body that can improve brightness of a display apparatus, and a display apparatus that uses the same.

2. Description of the Related Art

A liquid crystal display ("LCD") apparatus, which is one type of flat panel display (FPD) apparatus, generally includes a light source, a liquid crystal panel that receives light from the light source and displays an image, and polarizers. Polarizers are provided at the entrance and exit surfaces of the liquid crystal panel and polarize light from the light source.

The polarizers allow some of the light supplied from the light source to pass through to the liquid crystal, while blocking other light. Whether the light is allowed to pass through or is blocked depends on the polarization state of the light. More specifically, polarizers can allow, for instance, "s-polarized light", which is light that vibrates in one particular direction, to pass through, while allowing "p-polarized light" , which is light that vibrates in the other direction, to be absorbed for extinction. Accordingly, some of the light generated from the light source may be lost by the polarizers, resulting in deterioration in the brightness of the LCD. In this regard, attempts to compensate for the amount of light that is lost when absorbed by polarizers may be made. Such attempts, however, may undesirably increase power consumption of the LCD.

Therefore, a highly efficient LCD capable of improving brightness while achieving small power consumption is needed.

SUMMARY OF THE INVENTION

An optical body which can improve brightness of a display apparatus is provided. A display apparatus that includes the optical body is also provided.

According to one aspect, there is provided a display apparatus comprising a light source, a display panel that receives light from the light source and displays an image, and an optical body positioned between the light source and the display panel that allows light to be transmitted through the optical body or reflected away from the optical body depending on the vibration direction of the light, wherein the optical body includes an optical layer including a plurality of microfiber yarns having refractive index anisotropy, and pitches of the plurality of microfiber yarns are set based on the wavelength of the light to be transmitted or reflected.

According to another aspect, there is provided an optical body comprising an optical layer including a plurality of microfiber yarns having refractive index anisotropy, and pitches of the plurality of microfiber yarns is set based on the wavelength of light to be transmitted through the optical layer or reflected away from the optical layer.

The additional effects and advantages will be made more apparent to those skilled in the art from the following detailed description.

BRIEF DESCRIPTION OF THE DRAWINGS

The above and other features and advantages will become more apparent by describing in detail exemplary embodiments thereof with reference to the attached drawings in which:

FIG. 1 is an exploded perspective view of a liquid crystal display according to an exemplary embodiment;
FIG. 2 is a cross-sectional view of the liquid crystal display, taken along line I-I' of FIG. 1;
FIG. 3 illustrates functions of an optical body;
FIG. 4 illustrates peak values of light by wavelength;
FIG. 5A is an enlarged plan view illustrating an optical layer shown in FIG. 3 illustrating an exemplary embodiment;
FIG. 5B illustrates another exemplary embodiment which is a modification of the exemplary embodiment illustrated in FIG. 5A;

FIG. 6A is a cross-sectional view of the optical layer, taken along line II - II' of FIG. 5A;

FIG. 6B illustrates a modified embodiment of FIG. 6A;

FIG. 7A illustrates an exemplary stacked structure including a plurality of optical layers having different pitches of microfiber yarns;

FIG. 7B illustrates an exemplary stacked structure of a plurality of optical layers according to another exemplary embodiment;

FIGS. 8A through 8C are cross-sectional views illustrating arrangements of microfiber yarns according to various embodiments;

FIG. 9 is a cross-sectional view illustrating an arrangement of microfiber yarns according to another exemplary embodiment;

FIGS. 10A through 10D are cross-sectional views illustrating arrangements of microfiber yarns according to various embodiments;

FIG. 11 is a graph showing the transmittance of an optical body using optical layers with the optical characteristics by wavelength taken into consideration;

FIG. 12 illustrates an Experimental Example according to an exemplary embodiment and a Comparative Example;

FIG. 13 is a graph showing reflection efficiency; and

FIG. 14 is a graph showing transmittance.

## DETAILED DESCRIPTION OF THE INVENTION

Advantages and features of the present disclosure and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and will convey the concepts of the disclosure to persons of ordinary skill in the relevant art. Like reference numerals refer to like elements throughout the specification.

Spatially relative terms, such as "below," "beneath," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the relevant art. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In the following, in order to explain embodiments, a display apparatus will be described with regard to a liquid crystal display including a backlight assembly by way of example, and a direct-type backlight assembly will be illustrated by way of example, but aspects of the present invention are not limited thereto.

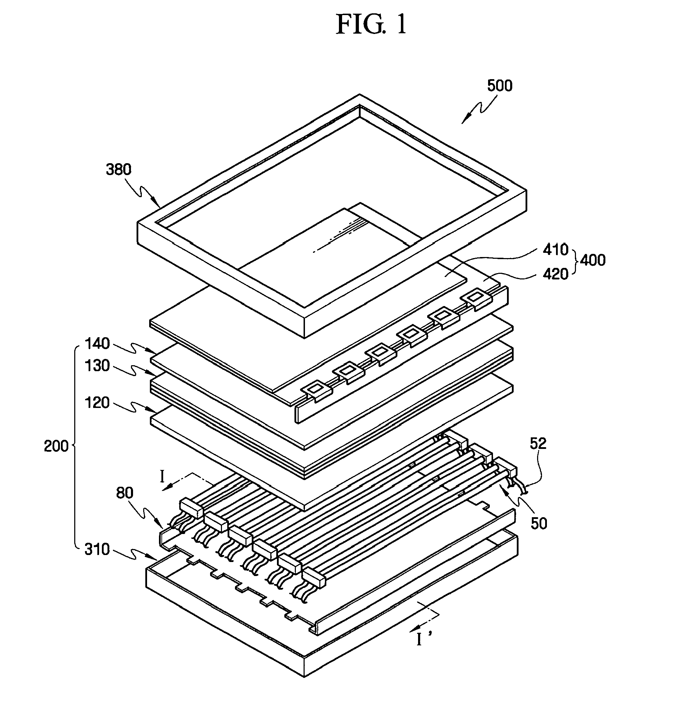

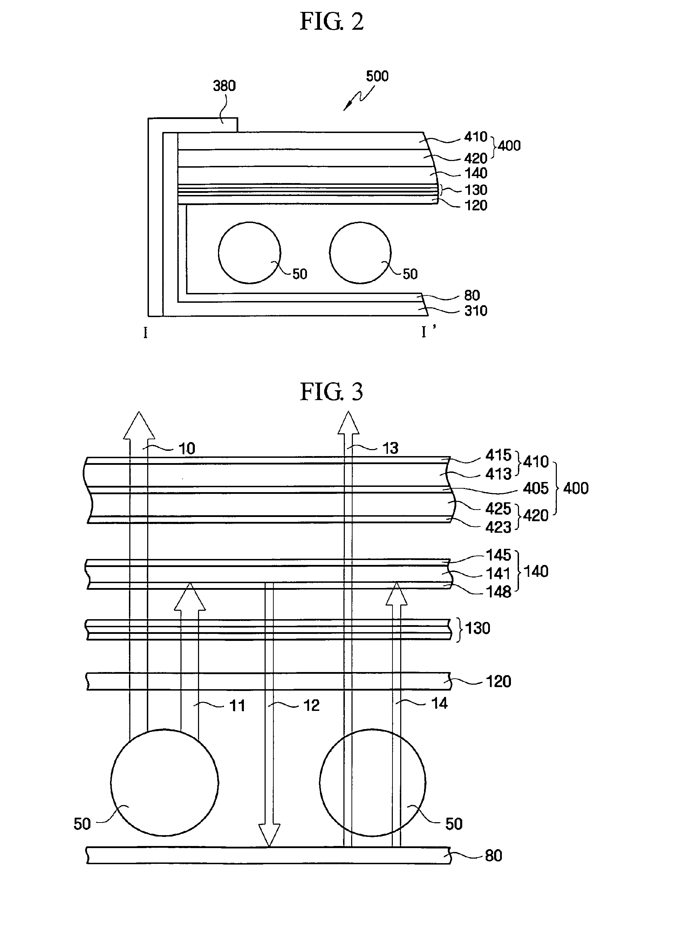

FIG. 1 is an exploded perspective view of a liquid crystal display according to an exemplary embodiment, and FIG. 2 is a cross-sectional view of the liquid crystal display, taken along line I-I' of FIG. 1.

Referring to FIGS. 1 and 2, the display apparatus 500 includes a liquid crystal panel 400 for displaying an image, and a backlight assembly 200 for supplying light to the liquid crystal panel 400.

The backlight assembly 200 includes a light source 50, a reflective sheet 80, a bottom chassis 310 for receiving the light source 50 and the reflective sheet 80, a diffusion plate 120, a plurality of optical sheets 130, and an optical body 140.

The light source 50 supplies light to the liquid crystal panel 400 through the optical body 140, which will later be described, the diffusion plate 120, and the plurality of optical sheets 130. Light source 50 may include a plurality of light sources. Line light sources, such as a cold cathode fluorescent lamp (CCFL), an external electrode fluorescent lamp (EEFL), a hot cathode fluorescence lamp (HCFL), or the like may be used for light source 50, and may be positioned at either side of the display apparatus 500. Alternatively, a point light source, such as a light emitting diode (LED), an organic light emitting diode (OLED), or the like, may be used as the light source 50. The type of the light source used in the display apparatus 500 is not, however limited to those listed herein. When an LED or OLED is used as the light source 50, the light source 50 may be used as a point light source type or a linear light source type in which a plurality of LED and/or OLED lamps are arranged in a line along one direction.

The reflective sheet 80 includes a reflective material, such as aluminum or polyethylene terephthalate (PET), and is positioned at a bottom surface of the bottom chassis 310. Light that has been generated from the light source 50 and has reached the reflective sheet 80 may be reflected by the reflective sheet 80 toward the liquid crystal panel 400 to then be supplied to the liquid crystal panel 400, as described in more detail below with respect to FIG. 3.

The backlight assembly 200 of the display apparatus 500 may be of a "direct-type," in which the light source 50 is received in the bottom surface of the bottom chassis 310, or an "edge-type," in which the light source 50 is disposed at a side surface of the backlight assembly 200. When the display apparatus 500 includes an edge-type backlight assembly, it may further include a light guide plate (not shown) for guiding the light generated from the light source 50 to be directed toward the liquid crystal panel 400.

The diffusion plate 120 is disposed above the light source 50 and diffuses the light. As a result, light generated from the light source 50 has a more uniform brightness after passing through the diffusion plate 120, so the light may be uniformly supplied to the liquid crystal panel 400.

The optical sheets 130 are disposed above the diffusion plate 120. The optical sheets 130 may include a prism sheet that focuses the light transmitted through the diffusion plate 120 to enhance frontal brightness of the display apparatus, and a diffusion sheet that further diffuses the light emitted from the diffusion plate 120.

The configuration and functions of the optical body 140 will later be described in greater detail.

Any display panel may be used as the display panel 400 as long as it can display an image without a particular limitation, and a non-emissive display panel that requires a separate light source may be used as the display panel 400. A liquid crystal panel or an electrophoretic display panel may be used as a non-emissive display panel. In the present invention, as a liquid crystal panel is used as the display panel 400 by way of example.

When a liquid crystal panel is used as the display panel 400, the display panel 400 includes a first substrate 420, a second substrate 410 facing the first substrate 420, and a liquid crystal layer (not shown) disposed between the first and second substrates 420 and 410.

The first substrate 420 includes a plurality of pixels each including a thin film transistor and a pixel electrode electrically connected thereto. Each of the pixels may have a square shape, a rectangular shape, or other shapes (for example, chevron shape), but not limited thereto.

The second substrate 410 includes color filters positioned to correspond to the positions of the pixels in a one-to-one relationship, and a common electrode that forms an electric field with the pixel electrodes.

In alternative embodiments, the first substrate 420, instead of the second substrate 410, may include the common electrode. When the first substrate 420 includes the common electrode, the common electrode forms a horizontal electric field together with the pixel electrode, to function as an opposite electrode for adjusting the orientation of liquid crystal.

The orientation of the liquid crystal interposed between the first substrate 420 and the second substrate 410 varies with variations in the electric field formed by the pixel electrode and the common electrode, thereby adjusting the amount of light transmitted through the first substrate 420 and the second substrate 410.

In another embodiment, the color filters positioned to correspond to the positions of the pixels in a one-to-one relationship may be formed on the first substrate 420. The light transmitted through the color filters is separated into red (R) light, green (G) light, and blue (B) light, which have different peaks of wavelengths of each of red (R) light, green (G) light, and blue (B) light depending on wavelengths. The brightness of the display apparatus 500 can be enhanced by designing the color filters in consideration of such wavelength dependent optical characteristics.

The bottom chassis 310 includes a bottom surface and sidewalls extending from the bottom surface to define a receiving space. The reflective sheet 80 and the light source 50 are received in the receiving space. The diffusion plate 120, the optical sheets 130, the optical body 140 and the display panel 400 are sequentially disposed above the light source 50. The top chassis 380 is combined with the bottom chassis 310 to cover the edge of the display panel 400.

FIG. 3 illustrates functions of an optical body 140 according to an exemplary embodiment.

Referring to FIG. 3, the reflective sheet 80 is disposed under the light source 50, and the diffusion plate 120, the optical sheets 130, the optical body 140, and the display panel 400 are sequentially disposed over the light source 50. The optical body 140 may include a plurality of layers. For example, as shown in FIG. 3, the optical body 140 may include the optical layer 141, and diffusion layers 145 and 148 respectively overlying and underlying the optical layer 141. The diffusion layers 145 and 148 may be made of, for example, polycarbonate.

The display panel 400 includes a first substrate 420 including a thin film transistor formed thereon, a second substrate 410 facing the first substrate 420, and a liquid crystal layer 405 interposed between the first substrate 420 and the second substrate 410. In addition, the first substrate 420 includes a first polarizer plate 423 provided at a surface of the display panel 400 at which light enters the display panel 400. The second substrate 410 includes a second polarizer plate 415 provided at the surface of the display panel 400 at which light exits the display panel 400.

The light generated from the light source 50 is sequentially transmitted through the diffusion plate 120, the optical sheets 130, and then to the optical body 140. The light generated from the light source 50 includes light that vibrates in various directions. The optical body 140 allows the light to be either transmitted through the optical body 140 or reflected away from the optical body 140 according to the vibration direction of the light. In addition, a transmission axis of the first polarizer plate 423 is parallel to an optical axis direction in which the light is transmitted by the optical body 140, allowing light parallel to the optical axis direction in which light is transmitted by the optical body 140 to be supplied to the display panel 400. On the other hand, the absorption axis of the first polarizer plate 423is parallel to optical axis direction in which the light is reflected by the optical body 140, so that such light is absorbed by first polarizer plat 423..

Figure 3 shows various potential light paths 10-14 for display apparatus 500. For simplicity of explanation, it is assumed that, for example, light vibrates in two different directions which are defined as P-polarized light, shown as first P-polarized light 10, and S-polarized light, shown as first S-polarized light 11. Because the light generated from the light source 50 includes light that vibrates in various directions, the light generated from the light source 50 includes, as shown in FIG. 3, first P-polarized light 10 and first S-polarized light 11.

With respect to first P-polarized light 10, the optical body 140 may transmit the first P-polarized light as shown in FIG. 3. The first P-polarized light 10 is sequentially transmitted through the optical body 140 and the first polarizer plate 423 to be supplied to the display panel 400 and used to display an image.

On the other hand, the first S-polarized light 11 may be reflected by the optical body 140. The first S-polarized light 11 is reflected by the optical body 140 to be changed into second S-polarized light 12, which then travels to the reflective sheet 80. If any first S- polarized light reaches the first polarizer plate 423, it is absorbed by the first polarizer plate 423

When the second S-polarized light 12 is reflected by the reflective sheet 80 to then be directed back to the optical body 140, the second S-polarized light 12 is divided into second P-polarized light 13 and third S-polarized light 14. As a result, like the first P-polarized light 10, the second P-polarized light 13 is sequentially transmitted through the optical body 140 and the first polarizer plate 423 to be supplied to the display panel 400 and used to display an image. On the other hand, the third S-polarized light 14 is again reflected by the optical body 140 to be divided into P-polarized light and S-polarized light.

The operation of the optical body 140 filtering the light according to the vibration direction of the light is repeatedly performed. Accordingly, the only the light used to display an image, which is the light that is supplied to the display panel 400, is light that is transmitted through the first polarizer plate 423 by the operation of the optical body 140. Thus, the brightness of the display panel 400 is enhanced.

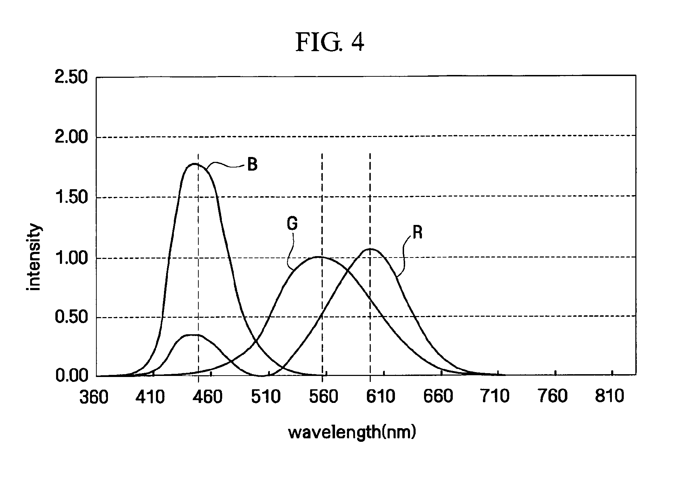

A method for designing optical body 140 so that the reflective polarizing function is optimized is explained with respect to FIG. 4 and Equation 1, below. To maximize the reflective polarizing function, the optical body 140 may be designed to cause constructive interference of traveling light.

Referring to FIG. 4, intensity values of wavelengths of red (R) light, green (G) light, and blue (B) light as a function of wavelength are illustrated. Blue (B) light has the maximum peak at approximately 450 nm, green (G) light at approximately 560 nm, and red (R) light at approximately 600 nm, respectively. Thus, an optical body may be designed to accommodate to each wavelength range.

Constructive interference between traveling light beams occurs when there is an optical path difference between the light beams of an odd-number multiple of half-wavelengths. Thus, the constructive interference effect may be maximized for different wavelengths by first determining the constructive interference conditions for the respective wavelengths that cause the appropriate optical path difference. Then, the refractive index *(i.e.,* the choice of material) and the distance that the light travels *(e.g.,* the thickness of the layer, or, in the exemplary embodiments described below, of the microfiber yam) can be adjusted to achieve the appropriate optical path difference..

For example, for two different mediums 1 and 2, the refractive indexes of the respective mediums 1 and 2 are n1 and n2, and distances the light travels in the medium (i.e. the thickness of the layer or microfiber) for the respective mediums 1 and 2 are d1 and d2. In this case, because constructive interference takes place when the optical path difference is $\lambda/2$, the constructive interference condition can be expressed as:

$$\lambda/2 = n1*d1+n2*d2=2*(n1*d1) =2*(n2*d2) \qquad \text{Equation 1}$$

That is to say, when $\lambda/4 = n1*d1=n2*d2$, constructive interference occurs.

In detail, the reflection efficiency of, for example, blue (B) light can be maximized in the following manner.

The maximum peak wavelength of blue (B) light is 450nm, if refractive indexes n1 and n2 of the mediums 1 and 2 are, for example, 1.64 and1.88 using the above expression(that is, $\lambda/4 = n1*d1=n2*d2$), the distances d1 and d2 of the respective mediums 1 and 2 are determined to be d1=69nm and d2=60nm. Therefore, the thickness of the optical layer and/or pitch of microfiber yarns can be optimized according to the respective wavelengths in the visible light region can be obtained. The pitch means a diameter of the microfiber yam. Thus, for microfiber yarns, the optical path difference can be adjusted using the pitch of microfiber yarns, that is, a traveling distance (d) of the light. Alternatively, the optical path difference can also be adjusted by varying the refractive index (n) of a medium used. That is to say, when microfiber yarns having the same pitch are used, a plurality of optical layer capable of maximizing reflection efficiency by wavelength range can be formed by varying the stretch ratio or material of the microfiber yarns. The stretch ratio means the ratio between a final length/an initial length of the microfiber yarns.

In general, an isotropic material such as, for example, polycarbonate (PC) or polyethylene terephthalate (PET) may be used for the optical layer 141 of optical body 140, and the refractive index thereof is between 1.2 and 2.0. An anisotropic material such as, for example, polyethylene naphthalate (PEN) or copolymers based on naphthalene dicarboxylic acid (co-PEN) may also be used for optical layer 141, and the refractive index thereof is between 1.2 and 2.0 before a stretching process is performed, and may be gradually increased by performing a stretching process.

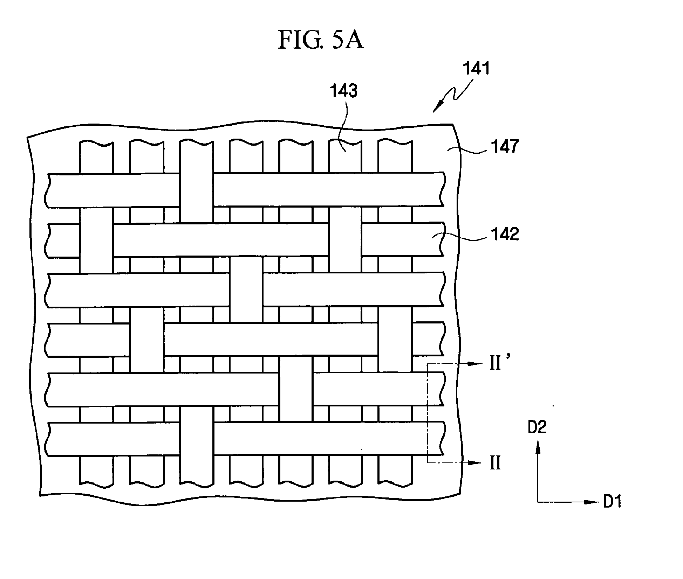

As described in more detail below with respect to FIGS. 5A to 10D, according to one embodiment, the optical layer 141 of optical body 140 includes a plurality of microfiber yarns.

The microfiber yarns have pitches that are optimized to maximize the reflection efficiency for each wavelength of light. The method of obtaining the optimized pitches of the microfiber yarns described above with respect to FIG. 4 and Equation 1 may be used.

Because the optical layer is formed using a material having a refractive index as described above, the pitches of the microfiber yarns included in the optical layer may be have a range of between 30 nm and 200 nm, covering the wavelength range of visible light, that is, between 350 nm and 900 nm.

Because the optical body 140 according to one embodiment includes a plurality of microfiber yarns, it may exhibit a multilayered optical film effect at an interface between each of the plurality of microfiber yarns even though it consists of a single layer. In addition, as described above, the reflection efficiency for each wavelength of light can be maximized by adjusting the pitch of the plurality of microfiber yarns, which will now be described in greater detail with reference to FIGS. 5A through 10D.

FIG. 5A is an enlarged plan view illustrating an optical layer shown in FIG. 3.

Referring to FIG. 5A, the optical layer 141 includes a first optical body 142 extending in a first direction D1, and a second optical body 143 extending in a second direction D2 perpendicular to the first direction D1.

Each of the first optical body 142 and the second optical body 143 has a line-shaped structure, like yam. In addition, the first optical body 142 and the second optical body 143 may have a structure in which they randomly alternate with each other, like fabric woven by yarns, extending in the first and second directions D1 and D2.

The first optical body 142 has different refractive indexes with respect to the first and second directions D1 and D2.

The first optical body 142 includes a plurality of microfiber yarns 144 having refractive index anisotropy and fiber-shaped structures. For example, the refractive index of the microfiber yarns 144 with respect to the first direction D1 is different from the refractive index of the microfiber yarns 144 with respect to the second direction D2 perpendicular to the first direction D1. The reason why the microfiber yarns 144 have the refractive index anisotropy is that the microfiber yarns 144 include a material providing refractive index anisotropy in a stretching direction, such as, for example, polyethylene naphthalate (PEN) or CoPEN. Therefore, in a case where the microfiber yarns 144 are stretched in one direction, they exhibit refractive index anisotropy in the stretching direction.

Each of the first optical body 142 and the optical layer 141 including the first optical body 142 may have refractive index anisotropy due to the above-described optical characteristics of the microfiber yarns 144.

Meanwhile, the second optical body 143 includes a light transmitting material, such as, for example, polyethylene terephthalate (PET) or CoPET that is a copolymer of PET and polycarbonate (PC).

The light transmitting material, such as PET or CoPET, has the same refractive index in all directions, irrespective of the stretching direction. Therefore, the second optical body 143 exhibits refractive index isotropy.

A portion of the optical layer 141, excluding an area occupied by the first optical body 142 and the second optical body 143, may be filled with an optical body matrix 147. The optical body matrix 147 may be made of, for example, the same material as the second optical body 143.

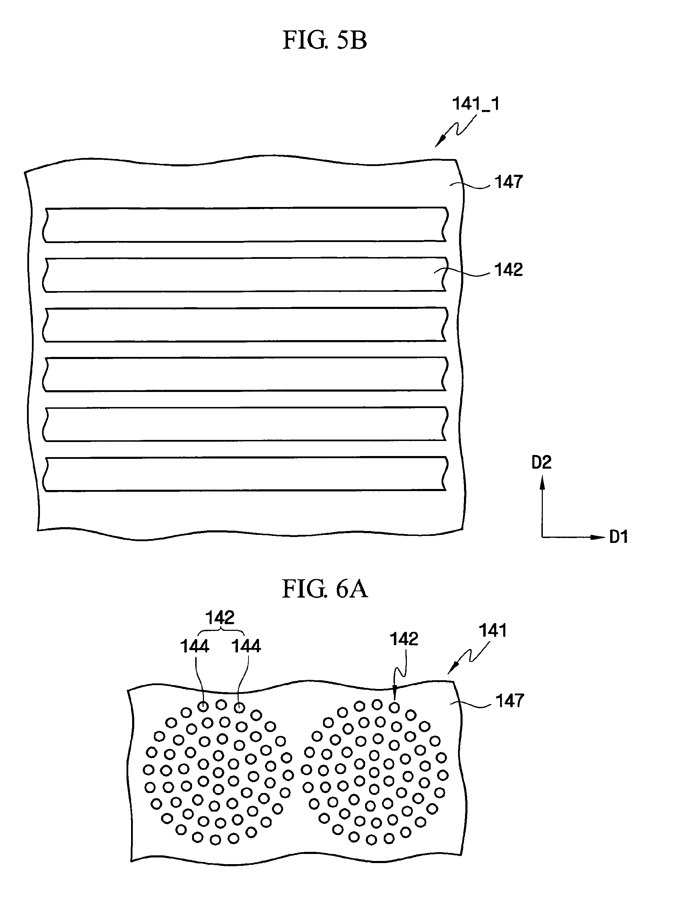

FIG. 5B illustrates another exemplary embodiment which is a modification of the exemplary embodiment shown in FIG. 5A. Referring to FIG. 5B, unlike in the embodiment illustrated in FIG. 5A the second optical body 143 may not be formed, and the optical layer 141_1 may include the first optical body 142 and/or the optical body matrix 147.

FIG. 6A is a cross-sectional view of the optical layer, taken along line II - II' of FIG. 5A.

Referring to FIG. 6A, the first optical body 142 includes a plurality of microfiber yarns 144. The plurality of microfiber yarns 144 are made of a material providing refractive index anisotropy in a stretching direction, such as, for example, polyethylene naphthalate (PEN) or CoPEN. The plurality of microfiber yarns 144 are fabricated by stretching the material in the first direction D1. After such stretching, the first optical body 142 that includes the plurality of microfiber yarns 144 exhibits refractive index anisotropy. If the stretching ratio varies, the refractive index of the first optical body 142 may vary accordingly.

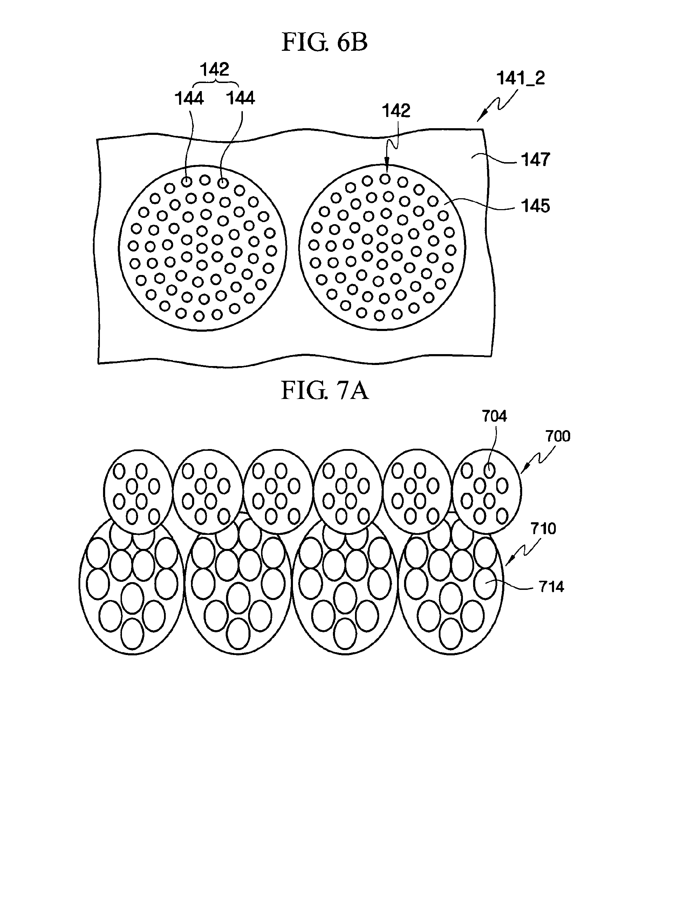

FIG. 6B illustrates an exemplary embodiment that is a modification of the embodiment shown in of FIG. 6A.

Referring to FIG. 6B, the plurality of microfiber yarns 144 may be provided as a bundle of microfiber yarns. The bundle of microfiber yarns may include a microfiber yam matrix 145, and a plurality of microfiber yarns 144 arranged in the microfiber yam matrix 145. The microfiber yarn matrix 145 may be made of, for example, substantially the same material as the optical body matrix 147.

FIG. 7A illustrates an exemplary stacked structure that includes a plurality of optical layers having different pitches of microfiber yarns.

As described above with respect to FIG. 4, because the highest peaks of various wavelength ranges are different from each other, the brightness of a display apparatus can be maximized by designing the display apparatus to be optimized for various wavelength ranges, respectively.

For example, a first optical layer 700 shown in FIG. 7A may include a plurality of microfiber yarns 704 having a pitch optimized to blue (B) light, and a second optical layer 710 may include a plurality of microfiber yarns 714 having a pitch optimized to green (G) light. A method of obtaining the optimized pitches of the microfiber yarns 704 and 714 has been described above with respect to FIG. 4 and Equation 1..

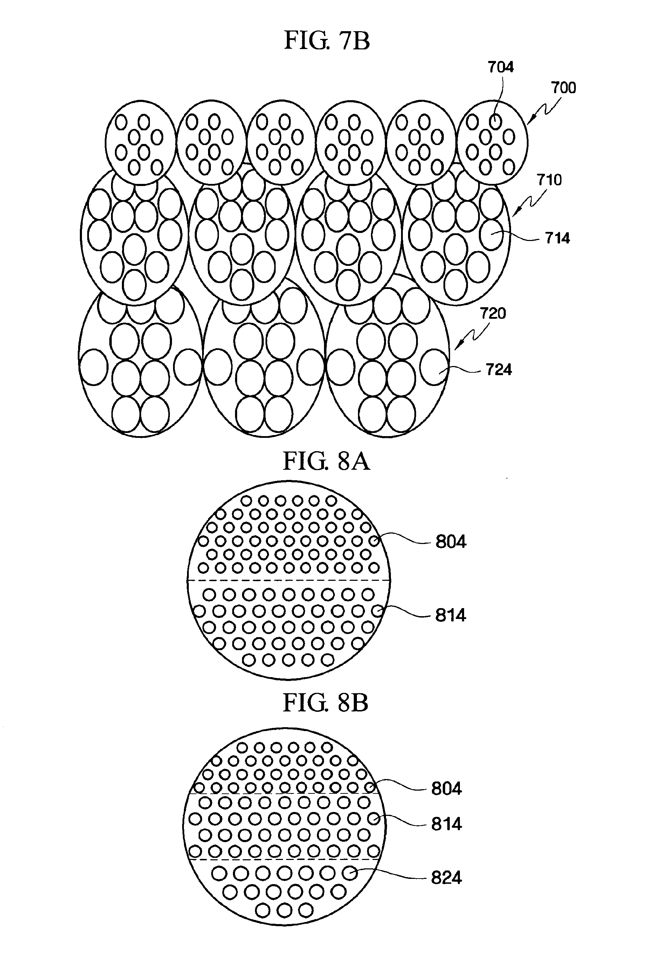

FIG. 7B illustrates a stacked structure including a plurality of optical layers according to another exemplary embodiment.

Referring to FIG. 7B, the plurality of optical layers may include a first optical layer 700, a second optical layer 710, and a third optical layer 720. Here, the first optical layer 700 may include a plurality of microfiber yarns 704 having a pitch optimized to a blue (B) light wavelength, the second optical layer 710 may include a plurality of microfiber yarns 714 having a pitch optimized to a green (G) light wavelength, and the third optical layer 720 may include a plurality of microfiber yarns 724 having a pitch optimized to a red (R) light wavelength. The method of obtaining the optimized pitches of the microfiber yarns 704, 714 and 724 is the same as described above with respect to FIG. 4 and Equation 1. As shown in FIG. 7B, the pitch of the microfiber yarns 724 included in the third optical layer 720 is typically the largest, the pitch of the microfiber yarns 714 included in the second optical layer 710 is typically medium-sized, and the pitch of the microfiber yarns 704 included in the first optical layer 700 is typically the smallest.

In a non-limiting example, the red (R) light wavelength is approximately 650 nm, the green (G) light wavelength is approximately 550 nm, and the blue (B) light wavelength is approximately 450 nm, and the pitch of the microfiber yarns 724 included in the third optical layer 720 may be between approximately 105 and approximately 115 nm, the pitch of the microfiber yarns 714 included in the second optical layer 710 may be between approximately 86 and approximately 96 nm, and the pitch of the microfiber yarns 704 included in the first optical layer 700 may be between approximately 70 and approximately 80 nm.

While FIGS. 7A and 7B illustrate, by way of example, an optical layer having the largest pitch, i.e., the third optical layer 720, positioned closest to the light source 50, aspects of the optical layer are not limited to the illustrated example. In some other embodiments, optical layers may be stacked in the opposite order to that of FIG. 7A or 7B. In some other embodiments, the respective optical layers may be randomly stacked, irrespective of the pitch size. Alternatively, a fourth optical layer or additional optical layers may further be stacked. A pitch of a plurality of microfiber yarns included in each of the optical layers may be optimized to a target wavelength for the purpose of maximizing the reflection efficiency.

In order to cover the wavelength range of visible light, the stacked structure that includes the plurality of optical layers includes microfiber yarns having pitches in the range of approximately 30 nm to approximately 200 nm, which falls within a wavelength range of visible light, that is, between 350 nm and 800 nm.

Further, in order to cover the entire wavelength range of visible light, the pitch of the microfiber yarns in the stacked structure that includes the plurality of optical layers may have any one value selected from a range of approximately 30 nm to approximately 200 nm, and the selected pitch may be uniformly distributed in the range of approximately 30 nm to approximately 200 nm.

FIGS. 7A and 7B illustrate microfiber yarns included in a single optical layer having the same pitch, and that the plurality of optical layers are stacked. However, even when the microfiber yarns are included in a single optical layer at different pitches, the reflection efficiency in the range of various wavelengths can also be maximized, which will now be described in greater detail with reference to FIGS. 8A through 9.

Referring t o FIG. 8A, the optical layer may include first microfiber yarns 804 having a first pitch and second microfiber yarns 814 having a second pitch. The first pitch is a pitch designed to maximally reflect polarized light of a first wavelength as a target. The second pitch is a pitch designed to maximally reflect polarized light of a second wavelength different from the first wavelength. As shown in FIG. 8A, the second pitch is larger than the first pitch.

The first microfiber yarns 804 and the second microfiber yarns 814 may have a substantially layered structure in a single optical layer. For example, as shown in FIG. 8A, a second microfiber yam region having the second microfiber yarns 814 disposed thereon may be positioned under the optical layer, and a first microfiber yam region having the first microfiber yarns 804 disposed thereon may be positioned above the optical layer.

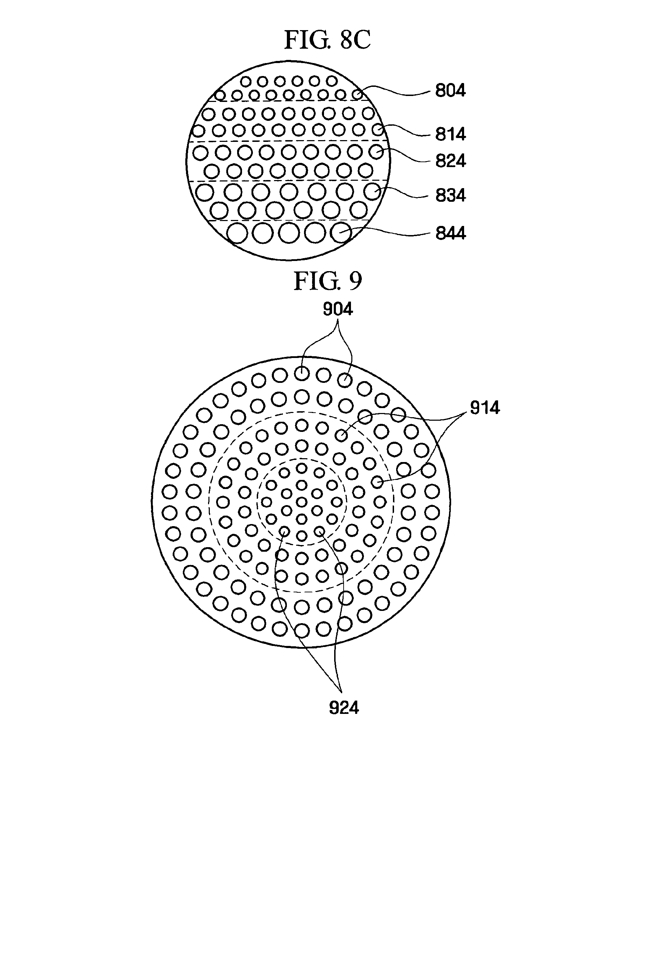

FIG. 8B illustrates an exemplary embodiment of an optical layer that includes first microfiber yarns 804 having a first pitch, second microfiber yarns 814 having a second pitch, and third microfiber yarns 824 having a third pitch. FIG. 8C illustrates an exemplary embodiment of an optical layer further including fourth microfiber yarns 834 and fifth microfiber yarns 844 as well as first, second and third microfiber yarns. The microfiber yarns shown in FIGS. 8B and 8C are disposed to have substantially layered structures, respectively.

While FIGS. 8A through 8C illustrate exemplary embodiments of optical layer in which the pitch increases downwardly, toward the light source 50, aspects of the optical layers are not limited to the illustrated examples. Up-and-down arrangement of specific microfiber yarns having a specific pitch may be reversed or changed in various manners.

FIG. 9 illustrates first microfiber yarns 904 having a first pitch, second microfiber yarns 914 having a second pitch, and third microfiber yarns 924 having a third pitch arranged in annular regions each containing the first, second or third microfiber yarns. In addition to the exemplary shapes illustrated in FIG. 9, various exemplary shapes using microfiber yarns having different pitches may be effectuated. For example, in some embodiments, microfiber yarns having different pitches may be randomly arranged. In some other embodiments, microfiber yarns having different pitches may be arranged such that the pitches gradually increase or decrease in a thickness-wise direction. In some alternative embodiments, microfiber yarns having different pitches may be arranged such that the pitches are distributed to have point of inflection midway **through in the**

**thickness-wise direction.**

In addition, while the foregoing embodiments have illustrated microfiber yarns that have circular sections, aspects of microfiber yarns are not limited to the illustrated examples.

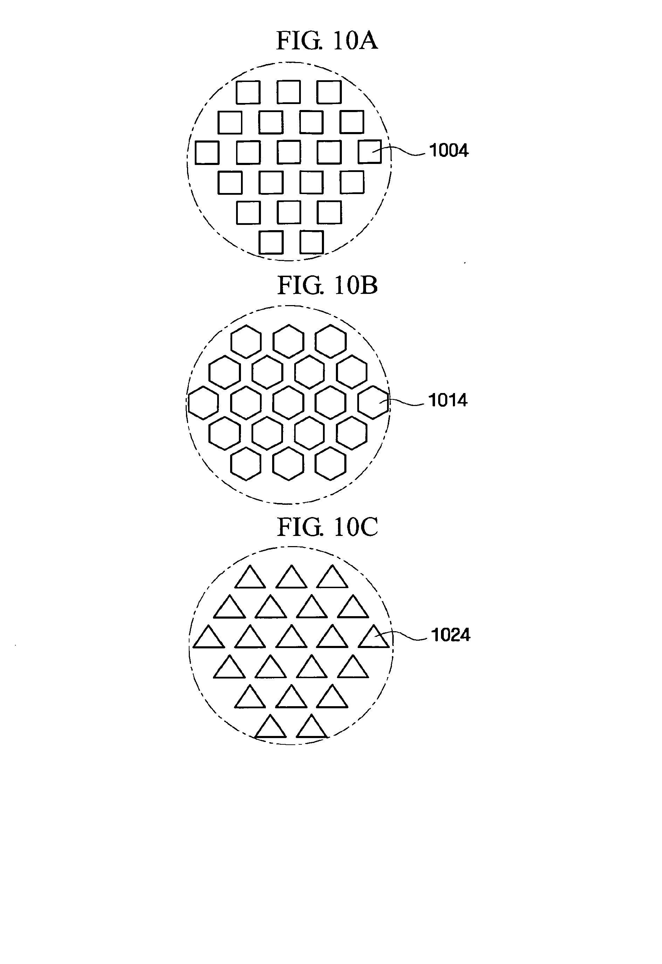

For example, as shown in FIG. 10A, cross sections of the microfiber yarns may have rectangular shapes 1004. In this case, fine adjustment of the pitch of the microfiber yarns is particularly easily achieved.

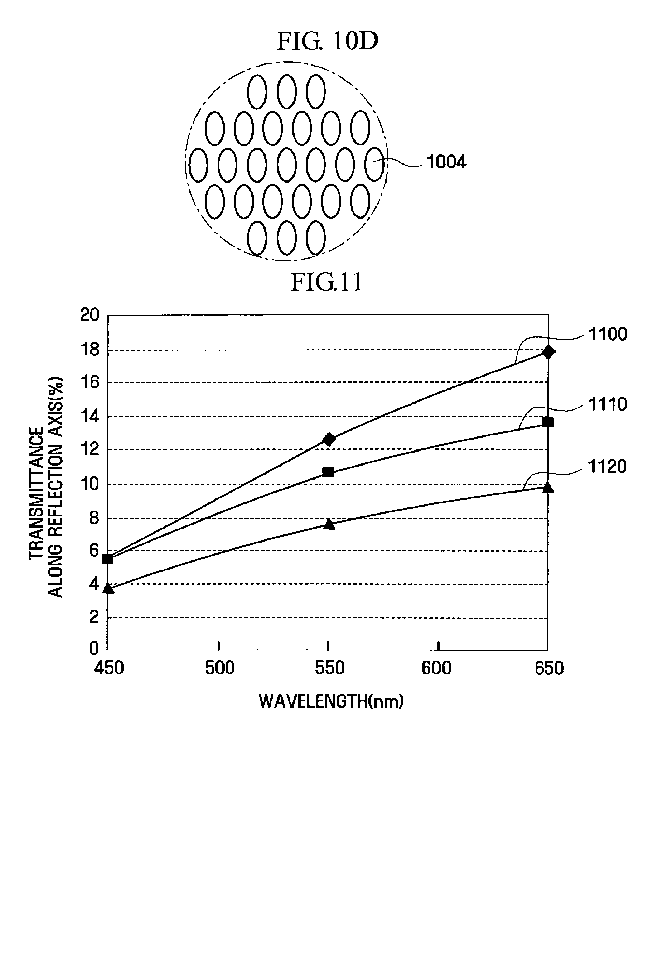

In addition, as shown in FIG. 10B, cross sections of the microfiber yarns may have hexagonal shapes 1014. Further, as shown in FIG. 10C, cross sections of the microfiber yarns may have triangular shapes 1024. Moreover, as shown in FIG. 10D, cross sections of the microfiber yarns may have elliptical shapes 1034. The microfiber yarns may have other types of various polygonal shapes.

The method of maximizing constructive interference by adjusting the pitch of the microfiber yarns by wavelength has been described with respect to FIG. 4 and Equation 1. As described above, the optical path difference can be adjusted using the pitch of microfiber yarns, that is, a traveling distance (d) of the light. Alternatively, the optical path difference can also be adjusted by varying the refractive index (n) of a medium used. That is to say, when microfiber yarns having the same pitch are used, a plurality of optical layer capable of maximizing reflection efficiency by wavelength range can be formed by varying the stretching ratio or material of the microfiber yarns.

FIG. 11 is a graph showing the transmittance of an optical body using optical layers with the optical characteristics by wavelength taken into consideration. Referring to FIG. 11, the graphs 1120 and 1110 represent transmittance curves of an optical layer designed with and without optical characteristics for blue (B), green (G) and red (R) light wavelengths taken into consideration, respectively. The graph 1100 represents a transmittance curve of an optical layer designed in consideration of the optical characteristics depending on the wavelength such that the optical layer may have a pitch greater than the maximum pitch.

As shown in FIG. 11, the transmittance increases as the wavelength in the visible light region increases. The transmittance of the optical layer designed with the optical characteristics for blue (B), green (G) and red (R) light wavelengths taken into consideration, as represented by the graph 1120, is lower than the transmittance of the optical layer randomly designed without the optical characteristics for blue (B), green (G) and red (R) light wavelengths taken into consideration, as represented by the graph 1110, and the transmittance of the optical layer designed in consideration of the optical characteristics depending on the wavelength to have a pitch greater than the maximum pitch, as represented by the graph 1100. The reflection effect of the optical layer designed in consideration of the optical characteristics by wavelength is relatively high.

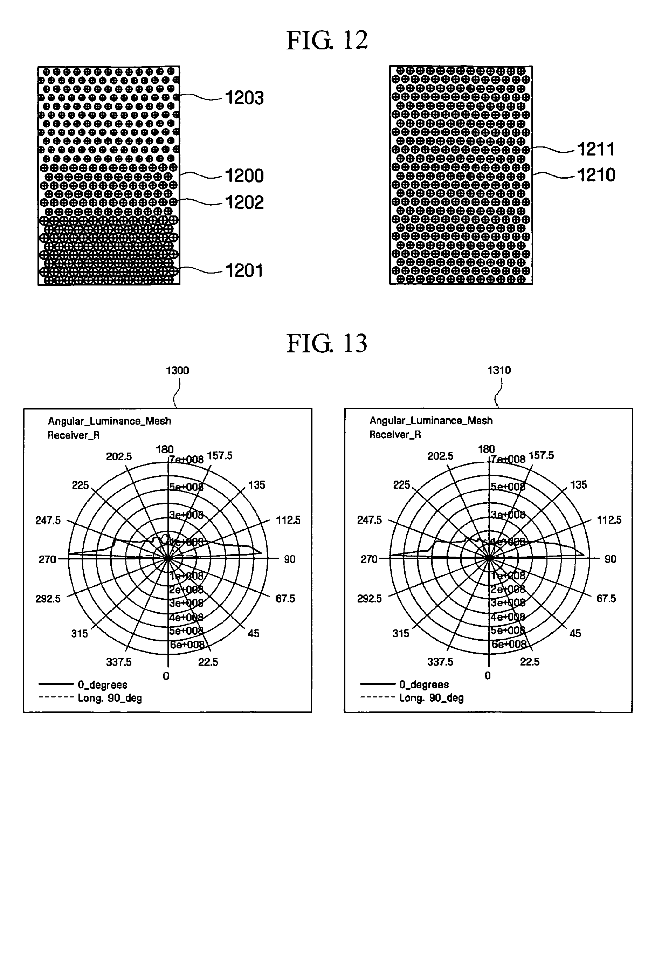

Next, reflective polarization effects of an optical layer with optical characteristics by wavelength taken into consideration will be described with reference to FIGS. 12 through 14.

FIG. 12 illustrates designs corresponding to Experimental Example according to an embodiment of the present invention and Comparative Example.

Referring to FIG. 12, the design of optical layer 1200 corresponds to an Experimental Example in which sizes of microfiber yarns for the respective wavelengths are measured and then used in forming an optical layer, as summarized in Table 1, and the design of optical layer 1210 corresponds to a Comparative Example in which microfiber yarns 1211 having a uniform size, that is, 90 nm, an average of the sizes of the microfiber yarns used in Experimental Example, are used in forming an optical layer. The optical layer 1200 includes microfibers 1201 having a size of 108.3 nm, microfibers 1202 having a size of 91.7 nm, and microfibers 1203 having a size of 75.0 nm.

Table 1

| | Wavelength (λ, nm) | Phase Difference | Size of Microfiber |
|---|---|---|---|
| | | (λ/4, nm) | Yam (nm) |
| Red (R) | 650 | 162.5 | 108.3 |
| Green G) | 550 | 137.5 | 91.7 |
| Blue (B) | 450 | 112.5 | 75.0 |

FIG. 13 is a graph showing reflection efficiency for the design of optical layers 1200 and 1210.

The graph 1300 illustrates the reflection efficiency for optical layer 1200 corresponding to the Experimental Example, and the graph 1310 illustrates the reflection efficiency for optical layer 1210 corresponding to the Comparative Example. As shown in FIG. 13, the reflection efficiency Receiver_R of the Experimental Example is higher than that of the Comparative Example. Specifically, the optical layer formed in the Experimental Example has a luminance value in the range of 1.5 to 1.9e+008, while the optical layer formed in the Comparative Example has a luminance value in the range of 1 to 1.5e+008.

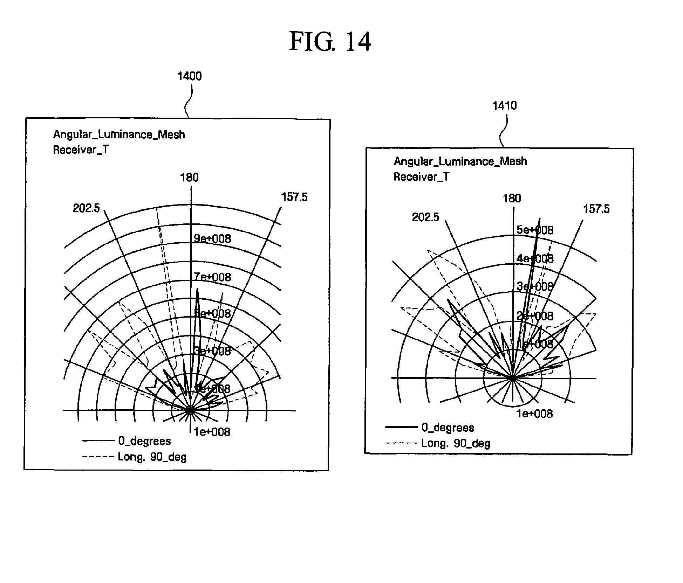

FIG. 14 is a graph showing results of transmittance data collected from the Experimental Example and the Comparative Example.

The graph 1400 illustrates the transmission efficiency of an optical layer 1200 corresponding to the Experimental Example and the graph 1410 illustrates the transmission efficiency of optical layer 1210 corresponding to the Comparative Example. FIG. 14 shows that the transmission efficiency along the transmission axis of the Experimental Example is 5 to 20% higher than that of the Comparative Example.

While the present invention has been shown and described with reference to exemplary embodiments thereof, it will be understood by those of ordinary skill in the art that various changes in form and details may be made therein without departing from the spirit and scope of the present invention as defined by the disclosure and the following claims. It is therefore desired that the present embodiments be considered in all respects as illustrative and not restrictive.

**Claims**

1. A display apparatus comprising:

   a light source;
   a display panel that receives light from the light source and displays an image; and
   an optical body positioned between the light source and the display panel,
   wherein the optical body includes an optical layer including a plurality of microfiber yarns having refractive index anisotropy, and pitches of the plurality of microfiber yarns are set based on wavelengths of the light to be transmitted through and reflected away from the optical body.

2. The display apparatus of claim 1, wherein the optical layer includes a first microfiber yarn region having a first pitch and a second microfiber yarn region having a second pitch, the first pitch and the second pitch are different from each other, the first pitch is set based on a first wavelength of light, and the second pitch is set based on a second wavelength of light different from the first wavelength.

3. The display apparatus of claim 1, wherein the optical layer is a first optical layer, and a second optical layer is further stacked on the first optical layer, the first optical layer including a plurality of first microfiber yarns having a first pitch, and the second optical layer including a plurality of second microfiber yarns having a second pitch, the first pitch and the second pitch are different from each other, the first pitch is set based on a first wavelength of light, and the second pitch is set based on a second wavelength of light different from the first wavelength.

4. The display apparatus of claim 1, wherein the refractive index anisotropy of the plurality of microfiber yarns depends on the stretching direction of the plurality of microfiber yarns, the refractive index of the microfiber yarns varying according to the stretch ratio.

5. The display apparatus of claim 1, wherein the plurality of microfiber yarns have pitches between 10 nm and 900 nm, which is set to correspond to the range of wavelength value in the visible light region.

6. The display apparatus of claim 1, wherein the optical layer includes a plurality of layers, each of the plurality of layers having a plurality of microfiber yarns, the pitches of the plurality of microfiber yarns in each of the plurality of layer being set respectively to correspond to the wavelength of at least one of red (R) light, green (G) light, and blue (B) light.

7. The display apparatus of claim 6, wherein the pitch of microfiber yarns set based on red light is between 105 nm and 115 nm, the pitch of microfiber yarns based on green light is between 86 nm and 96 nm, and the pitch of microfiber yarns based on blue light is between 70 nm and 80 nm.

8. The display apparatus of claim 1, wherein the optical layer includes a first optical body having refractive index anisotropy, and a second optical body having refractive index isotropy and supporting the first optical body, wherein the first optical body includes the plurality of microfiber yarns.

9. The display apparatus of claim 8, wherein the refractive index of the second optical body is between 1.3 and 2.0, and the refractive index of the plurality of microfiber yarns is between 1.3 and 2.0 before the first optical body undergoes a stretching process.

10. The display apparatus of claim 1, further comprising a prism sheet for enhancing frontal brightness by focusing light from the light source.

# FIG. 1

# FIG. 2

# FIG. 3

FIG. 4

FIG. 5A

FIG. 5B

FIG. 6A

# FIG. 6B

# FIG. 7A

## FIG. 7B

## FIG. 8A

## FIG. 8B

## FIG. 8C

804
814
824
834
844

## FIG. 9

904

914

924

## FIG. 10A

1004

## FIG. 10B

1014

## FIG. 10C

1024

## FIG. 10D

1004

## FIG.11

# FIG. 12

# FIG. 13

# FIG. 14

1400

Angular_Luminance_Mesh
Receiver_T

180
202.5
157.5
9e+008
7e+008
5e+008
3e+008
1e+008
1e+008
——— 0_degrees
----- Long. 90_deg

1410

Angular_Luminance_Mesh
Receiver_T

180
202.5
157.5
5e+008
4e+008
3e+008
2e+008
1e+008
1e+008
——— 0_degrees
----- Long. 90_deg

Europäisches
Patentamt

European
Patent Office

Office européen
des brevets

# EUROPEAN SEARCH REPORT

**Application Number**

EP 10 01 4963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/027936 A1 (3M INNOVATIVE PROPERTIES CO [US]) 6 March 2008 (2008-03-06) * figures 1-4,6,9 * * page 4, line 29 - page 7, line 11 * * page 11, line 17 - page 16, line 7 * * page 25, line 30 - page 26, line 3 * * page 26, line 4 - line 17 * * page 27, line 5 - line 17 * ----- | 1-10 | INV. G02F1/13357 G02F1/1335 G02B5/30 |
| X | WO 2009/142396 A2 (WOONGJIN CHEMICAL CO LTD [KR]; KIM YEON SOO [KR]; KIM DO HYUN [KR]; YA) 26 November 2009 (2009-11-26) * figures 1-11,20 * * paragraph [0006] - paragraph [0011] * * paragraph [0048] - paragraph [0070] * * paragraph [0079] * ----- | 1,4,8,10 | |
| A | US 2006/193593 A1 (OUDERKIRK ANDREW J [US] ET AL OUDERKIRK ANDREW J [US] ET AL) 31 August 2006 (2006-08-31) * figure 1 * * paragraph [0033] * ----- | 1-10 | TECHNICAL FIELDS SEARCHED (IPC) G02F G02B |

The present search report has been drawn up for all claims

| Place of search | Date of completion of the search | Examiner |
|---|---|---|
| Munich | 8 March 2011 | Kentischer, Florian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 01 4963

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2011

| Patent document cited in search report | | Publication date | Patent family member(s) | | Publication date |
|---|---|---|---|---|---|
| WO 2008027936 | A1 | 06-03-2008 | CN | 101506698 A | 12-08-2009 |
| | | | EP | 2057489 A1 | 13-05-2009 |
| | | | JP | 2010503028 T | 28-01-2010 |
| | | | KR | 20090057234 A | 04-06-2009 |
| | | | US | 2008055724 A1 | 06-03-2008 |
| WO 2009142396 | A2 | 26-11-2009 | KR | 20090120074 A | 24-11-2009 |
| US 2006193593 | A1 | 31-08-2006 | CN | 101142500 A | 12-03-2008 |
| | | | EP | 1853945 A2 | 14-11-2007 |
| | | | JP | 2008532089 T | 14-08-2008 |
| | | | KR | 20070108557 A | 12-11-2007 |
| | | | WO | 2006093665 A2 | 08-09-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020090117062